# EUROPÄISCHE PATENTSCHRIFT

(11) **EP 2 168 419 B1**
(45) Veröffentlichungstag und Bekanntmachung des Hinweises auf die Patenterteilung: **01.05.2013**
(21) Anmeldenummer: 09164080.5
(22) Anmeldetag: 30.06.2009
(51) Int. Cl.: A01D 41/127, A01D 41/12, G01N 21/35

(54) **Landwirtschaftliche Erntemaschine**
Agricultural harvester
Moissonneuse agricole

(30) Priorität: 24.09.2008 DE 102008048760
(43) Veröffentlichungstag der Anmeldung: 31.03.2010
(73) Patentinhaber: CLAAS Selbstfahrende Erntemaschinen GmbH, 33426 Harsewinkel (DE)
(72) Erfinder: Korte, Hubert, 48346, Ostbevern (DE); Lütke Harmann, Tim, 48324 Sendenhorst (DE)

(56) Entgegenhaltungen:
- EP-A1- 0 440 978
- EP-A1- 0 723 740
- DE-A1- 2 627 096
- JP-A- 2005 168 324
- US-A- 5 957 773
- US-A- 6 100 526
- US-A1- 2003 063 276
- US-B1- 6 559 655

## Beschreibung

Die Erfindung betrifft eine landwirtschaftliche Erntemaschine, insbesondere Mähdrescher, nach dem Oberbegriff des Anspruchs 1.

Aus der DE 26 27 096 ist ein Mähdrescher bekannt geworden, der über einen in Fraktionen unterteilten Korntank verfügt, wobei beim Maisdrusch die Maiskörner in der einen Fraktion und die sogenannten Spindeln in der weiteren Fraktion des Korntanks gespeichert werden. Die Teilung des aus der Dresch- und Trenneinrichtung austretenden, aus Maiskörner und Spindeln bestehenden Nutzmaterialstromes wird in einer mechanisch arbeitenden Separieranordnung vorgenommen. Eine Wurfwalze beschleunigt den Nutzmaterialstrom, Der beschleunigte Nutzmaterialstrom geht beim Austritt aus der Wurfwalze in eine Flugphase über, wobei sich in Abhängigkeit von ihren spezifischen Eigenschaften die Malskörner und die Spindeln auf unterschiedlichen Flugbahnen bewegen. Aufgrund der schwerkraftbedingt unterschiedlichen Flugbahnen ist der Nutzmaterialstrom am Ende der Flugphase in einen überwiegend aus Maiskörnern und einen überwiegend aus Spindeln bestehenden Nutzmaterialstrom getrennt. Beide Nutzmaterialströme werden dann über Fördereinrichtungen den jeweiligen Fraktionen des Komtanks zugeführt. Eine derartige Ausführung einer Separiereinrichtung hat insbesondre den Nachteil, dass die Fraktionierung schwerktraftabhängig erfolgt und die frei fliegenden Gutbestandteile einer Vielzahl äußerer Einflüsse, wie die Flugbahn ändernde Relbeffekte zwischen den Gutbestandtellen, unterliegen, die letztlich die Genauigkeit der Fraktionierung stark beeinträchtigen.

Diesen Nachteil überwindend, schlägt die EP 0 723 740 vor, dass ein Analysator vorgesehen Ist, der spezifische Merkmale des geernteten Guts delektiert und in Abhängigkeit von den detektierten Gutparametern einen Verteiler so steuert, dass der einzige Nutzmaterialstrom in Abhängigkeit von den Ernteguteigenschaften einer bestimmten Fraktion eines in zumindest zwei Fraktionen unterteilten Komtanks zugeführt wird. Bei derartig ausgeführten Systemen hängt die Separierqualität maßgeblich von der Detektiergenauigkeit der Sensoren ab, wobei deren Sensiergenauigkeit maßgeblich von den Eigenschaften des Erntegutes selbst und der Position der Sensoren zum Nutzmaterialstrom beeinflusst wird. Häufig treten bei derartigen Sensoren dann Probleme auf, wenn große Nutzmaterialstrommengen gleichzeitig und mit hoher Geschwindigkeit an dem Sensor vorbeigeführt werden.

Aus der US 2003/0063276 A1 ist eine selbatfahrende Erntemaschine bekannt, die eine Fördervorrichtung zum Transport eines Nutzmaterialstromes aufweist, welcher über einen Gutstromteiler auf verschiedene Behältnisse aufteilbar ist. Die Fördervorrichtung umfasst eine Analyseeinrichtung, die kontinuierlich spezifische Parameter des Nutzmaterialstromes erfasst und auswertet. Das Ergebnis wird zur Verteilung des Nutzmaterialstromes auf einen der Behälter herangezogen.

Aus der EP 0 723 740 A1 ist eine selbstfahrende Erntemaschine gemäß dem Oberbegriff des Anspruches 1 bekannt, die eine Vielzahl von Erntegutspeichermitteln aufweist, in welche Erntegut mit Hilfe eines Umlenkers auf die verschiedenen Erntegutspeicher vertellt wird.

Es ist deshalb Aufgabe der Erfindung die beschriebenen Nachteile des Standes der Technik zu vermeiden und insbesondere eine Separiereinrichtung für landwirtschaftliche Erntemaschinen vorzuschlagen, die mit hoher Fraktioniergenauigkeit und geringem technischem Aufwand einen Nutzmaterialstrom in unterschiedliche Gutqualitäten aufweisende Teilnutzmaterialströme aufteilen kann.

Diese Aufgabe wird erfindungsgemäß durch die kennzeichnenden Merkmale des Anspruchs 1 gelöst.

Zur Steuerung des Umlenkers ist eine Prüfvorrichtung vorgesehen, die spezifische Ernteguteigenschaften analysiert. Das Ergebnis der Analyse wird zur Steuerung des Betriebes des Umlenkers herangezogen.

Indem der selbstfahrenden Erntemaschine, insbesondere einem Mähdrescher, mit einem Erntevorsatz zum Ernten von Halmgut, Arbeitsorganen zur Entkörnung des Halmgutes und zur Trennung und Reinigung der aus dem Halmgut separierten, einen Nutzmaterialstrom bildenden Fruchtstände, zumindest einer Fördereinrichtung für den Transport des Nutzmaterialstromes über einen Gutstromteiler in eine zumindest in zwei Fraktionen unterteilte Speichereinrichtung der zumindest einen Fördereinrichtung der landwirtschaftlichen Erntemaschine, eine permanent spezifische Parameter des Nutzmaterialstroms detektierende Analyseeinrichtung zugeordnet ist und in Abhängigkeit von dem Analyseergebnis der Gutstromteiler den Nutzmaterialstrom einer der zumindest zwei Fraktionen der Speichereinrichtung zuführt, wobei eine Steuer- und Regeleinrichtung in Abhängigkeit von einer jeder Fraktion der Speichereinrichtung zugeordneten Qualitätskennlinie für Teilnutzmaterialströme Stellsignale zur Ansteuerung des Gutstromtellers generiert, wobei die Analyseeinrichtung der zumindest eine Fördereinrichtung als Bypass in der Weise zugeordnet ist, dass permanent ein Analysematerialstrom des die Fördereinrichtung durchlaufenden Nutzmaterialstromes in die Analyseeinrichtung umgelenkt wird und nach dessen Analyse dem Nutzmaterialstrom wieder zugeführt wird, und wobei der Gutstromteller eine schwenkbare Weiche umfasst, die in Abhängig- keit von den von der Steuer- und Regeleinrichtung generierten Stellsignalen den Zugang zu der jeweiligen Fraktion der Speichereinrichtung freigibt, wird sichergestellt, dass mit hoher Fraktioniergenauigkeit ein Nutzmaterialstrom in unterschiedliche Gutqualitäten aufweisende Teilnutzmaterialströme aufgeteilt wird. Auf diese Weise kann In Abhängigkeit von Kundenwünschen ein Erntegut mit sehr homogenen, nahezu identischen Guteigenschaften bereitgestellt werden, was auf Erzeugerseite wegen der homogeneren Qualität auch zu höheren Erlösen führt.

Dies hat außerdem den Vorteil, dass einerseits die Qualität des Nutzmaterialstroms kontinuierlich überwacht wird und dass andererseits zur Ableitung des zu detektierenden Analysematerialstroms nur geringer technischer Aufwand betrieben werden muss.

Damit die Analyseeinrichtung spezifische Parameter des Analysematerialstromes unmittelbar detektieren kann ist ihr in vorteilhaften Weiterbildung der Erfindung ein Sensorkopf zugeordnet, wobei eine qualitativ hochwertige Inhaltsstoffbestimmung dann erreicht wird, wenn der Sensorkopf einen vielfach technisch bewährten NIR-Sensor umfasst.

Eine besonders effizient arbeitende und eine kostengünstig Struktur aufweisende Analyseeinrichtung wird dann geschaffen, wenn der Sensorkopf als serienmässig lieferbarer Reflexionsmesskopf und/oder Transmissionsmesskopf ausgeführt ist. Während ersterer von dem Analysematerialstrom reflektierte Lichtwellen analysiert, analysiert letzterer die den Analysematerialstrom durchsetzenden Lichtwellen. Indem der Transmissionsmesskopf und der Reflexlonsmesskopf alternativ oder gemeinsam in die Analyseeinrichtung Integrlerbar sind, wird zudem sichergestellt, dass In Abhängigkeit von den Guteigenschaften und den Umgebungsbedingungen jeweils das besser geeignete Messverfahren eingesetzt werden kann.

Eine konstruktiv besonders einfache Struktur ergibt sich für den Wechsel zwischen alternativer oder gemeinsamer Anordnung von Reflexionsmesskopf und Transmissionsmesskopf dann, wenn der Transmissionsmesskopf demontierbar an der Analyseeinrichtung angeordnet ist.

Damit die von der Analyseeinrichtung ermittelten spezifischen Parameter eine hohe Genauigkeit aufweisen, sind Mindestdurchsätze und bestimmte Temperaturbereiche während des Analyseprozesses erforderlich. Um optimale Messbedingungen zu gewährleisten, ist deshalb in einer vorteilhaften Ausgestaltung der Erfindung vorgesehen, dass dem Sensorkopf eine Lichtschranke und/oder ein oder mehrere Temperatursensoren zugeordnet ist/sind.

Eine effiziente und schnelle Umsetzung der von der Analyseeinrichtung detektierten spezifischen Parameter in eine gezielte Übergabe des jeweiligen Teilfiutzniaierialstroms in die jeweilige Fraktion der Speichereinrichtung ergibt sich dann, wenn die Analyseeinrichtung mit einer Steuer- und Regeleinrichtung kommuniziert, die in Abhängigkeit von den ermittelten spezifischen Parametern des Nutzmaterialstromes den Gutstromteiler zur Förderung des Nutzmaterialstromes in eine der zumindest zwei Fraktionen der Speichereinrichtung ansteuert.

In einer vorteilhaften Weiterbildung der Erfindung ist die Weiche mittels Hubzylinder verschwenkbar, wobei die Weiche In ihrer ersten Endposition den einen Zugang verschließt und den weiteren Zugang freigibt während sie in einer zweiten Endposition den weiteren Zugang verschließt und den anderen Zugang freigibt. Dies hat Insbesondere den Vorteil, dass mittels einer einzigen Weiche die Umlenkung der Tellnutzmaterialströme bewirkt werden kann und die Weiche zugleich in dem fließenden Gutstrom bewegbar ist, ohne dass Unterbrechungen im Gutfluss auftreten.

Die störungsarme Übergabe der Teilnutzmaterialströme von der zumindest einen Fördereinrichtung über den Gutstromteiler an die jeweilige Fraktion der Speichereinrichtung wird auch dadurch noch verbessert, dass jedem Zugang des Gutstromtellers zu der jeweiligen Fraktion eine Förderschnecke zugeordnet ist, die den Nutzmaterialstrom in die jeweilige Fraktion der Speichereinrichtung fördert.

Um entweder eine optimale Befüllung jeder Fraktion der Speichereinrichtung bei höheren oder reduzierten Fertigungskosten sicherzustellen, ist In einer weiteren vorteilhaften Ausgestaltung der Erfindung vorgesehen, dass Jede Förderschnecke starr oder verschwenkbar die jeweilige Fraktion der Speichereinrichtung durchsetzt.

Eine günstige Anordnung der Förderschnecken sowie ein großes Speichervolumen der Fraktionen ergeben sich in einer vorteilhaften Ausgestaltung der Erfindung dann, wenn die Speichereinrichtung quer zur Längsrichtung der Erntemaschine in Fraktionen unterteilt ist.

In einer weiteren vorteilhaften Ausgestaltung der Erfindung sind in der Steuer- und Regeleinrichtung zur Definition der Qualität der in den Fraktionen der Speichereinrichtung speicherbaren Nutzmaterialströme Qualitätskennlinien editierbar hinterlegt. Dies hat insbesondere den Vorteil, dass kundenspezifisch spezielle Qualitätskriterien definierbar sind, die dann mittels der Steuer- und Regeleinrichtung auch sehr präzise eingehalten werden können.

Damit der Betreiber der landwirtschaftlichen Erntemaschine von einer anstrengenden und ermüdenden Überwachung der Befüllgrade der verschiedenen Fraktionen der Speichereinrichtung entlastet wird, ist in einer vorteilhaften Ausgestaltung der Erfindung vorgesehen, dass der Befüllgrad der Fraktionen der Speichereinrichtung mittels Sensiereinrichtungen überwacht wird, wobei die Sensierienrichtungen vorzugsweise als Kamera ausgebildet sind.

Weitere vorteilhafte Ausgestaltungen sind Gegenstand weiterer Unteransprüche und werden nachfolgend an Hand in mehreren Figuren dargestellter Ausfuhrurtgsbeispiefe beschrieben.
Es zeigen:
- Figur 1: eine als Mähdrescher ausgeführte landwirtschaftliche Erntemaschine mit erfindungsgemäßer Analyseeinrichtung
- Figur 2: eine Detailansicht der in Fraktionen unterteilen Speichereinrichtung nach Figur 1
- Figur 3: eine Detailansicht der Analyseeinrichtung nach Figur 1

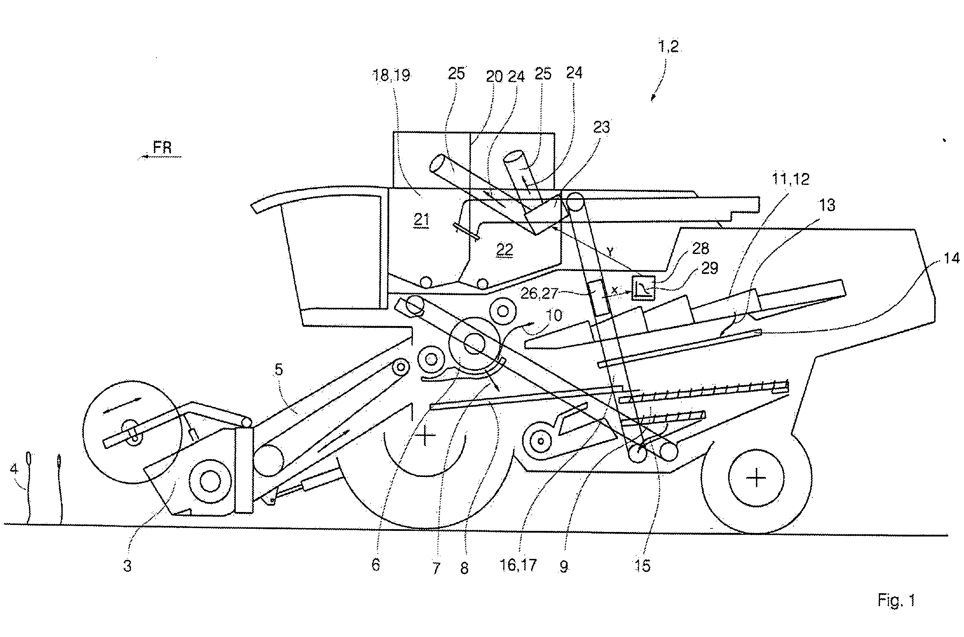

Figur 1 zeigt eine als Mähdrescher 2 ausgeführte landwirtschaftliche Erntemaschine 1, In an sich bekannter und deshalb nicht im Detail ausgeführter Weise ist dem Mähdrescher 2 frontseitig ein Getreideschneidwerk 3 zugeordnet, welches das gewachsen Getreide 4 erntet und über eine Schragfördereinrichtung 5 den Dreschorganen 6 des Mähdreschers 2 zuführt. An den Dreschorganen 6 wird ein überwiegend aus Körnern bestehender Gutstrom 7 über einen Vorbereitungsboden 8 einer Reinigungseinrichtung 9 zugeführt. Ein weiterer Gutstrom 10 tritt im rückwärtigen Bereich der Dreschorgane 6 aus diesen aus und gelangt auf eine im dargestellten Ausführungsbeispiel als Hordenschüttler 11 ausgeführte Trenneinrichtung 12. Auf der Trenneinrichtung 12 wird ein weiterer, überwiegend aus Körnern bestehender Gutstrom 13 abgeschieden, der über einen Rückführboden 14 und den Vorbereitungsboden 8 ebenfalls der Reinigungseinrichtung 9 zugeführt wird. In der Reinigurigseinrichtung 9 wird zumindest ein gereinigter, aus Körner bestehender Nutzmaterialstrom 15 abgeschieden, der über zumindest eine, als Elevator 16 ausgeführte Fördereinrichtung 17 einer als Korntank 18 ausgeführten Speichereinrichtung 19 zugeführt wird.

In erfindungsgemäßer Weise ist die Speichereinrichtung 19 mittels einer aus festem oder flexiblem Material bestehenden und quer zur Fahrtrichtung FR angeordneten Trennwand 20 in eine erste Fraktion 21 und zumindest eine weitere Fraktion 22 unterteilt. Es liegt im Rahmen der Erfindung, dass die Speichereinrichtung 19 in eine Vielzahl von Fraktionen 21, 22 unterteilt ist, je nachdem in wie viele Qualitätsstufen der Nutzmaterialstrom 15 in der Speichereinrichtung 19 separiert werden soll. In noch näher zu beschreibender Weise mündet das obenseitige Ende der zumindest einen Fördereinrichtung 17 im Bereich der Speichereinrichtung 19 in einen Gutstromteiler 23, der den Nutzmaterialstrom 15 in Teilnutzmaterialströme 24 separiert. Zur Förderung der Teilnutzmaterialströme 24 in die jeweilige Fraktion 21, 22 der Speichereinrichtung 19 sind dem Gutstromteiler 23 speichereinrichtungsseitig für jede der Fraktionen 21, 22 des Korntanks 18 jeweils eine Förderschnecke 25 zugeordnet, die entweder starr oder schwenkbeweglich in die jeweilige Fraktion 21, 22 des Korntanks 18 hineinragt. Zugleich ist der wenigstens einen Fördereinrichtung 17 eine Analyseeinrichtung 26 als Bypass 27 zur Detektion spezifischer Parameter X des die Fördereinrichtung 17 durchlaufenden Nutzmaterialstromes 15 zugeordnet. In noch näher zu beschreibender Weise werden die von der Analyseeinrichtung 26 detektierten spezifischen Parameter X an eine Steuer- und Regeleinrichtung 28 leitungsbasiert oder drahtlos übermittelt. In der Steuer- und Regeleinrichtung 28 sind sogenannte Qualitätskennlinien 29 hinterlegt, die für jede der Fraktionen 21, 22 der Speichereinrichtung 19 die Qualität des dort zu speichernden Teilnutzmaterialstromes 24 definieren. Damit die Qualitätskriterien in Abhängigkeit von Kundenwünschen geändert werden können, sind die hinterlegten Qualitätskennlinien 29 editierbar, In Abhängigkeit von den jeder Fraktion 21, 22 der Speichereinrichtung 19 zugeordneten Qualitätskriterien der Teilnutzmaterialströme 24 generiert die Steuer- und Regeleinrichtung 28 Stellsignale Y, die den Gutstromteiler 23 so ansteuern, dass in noch näher zu beschreibender Weise die Förderung eines Teilnutzmaterialstroms 24 in die entsprechende Fraktion 21, 22 der Speichereinnchiung 19 bewirkt wird.

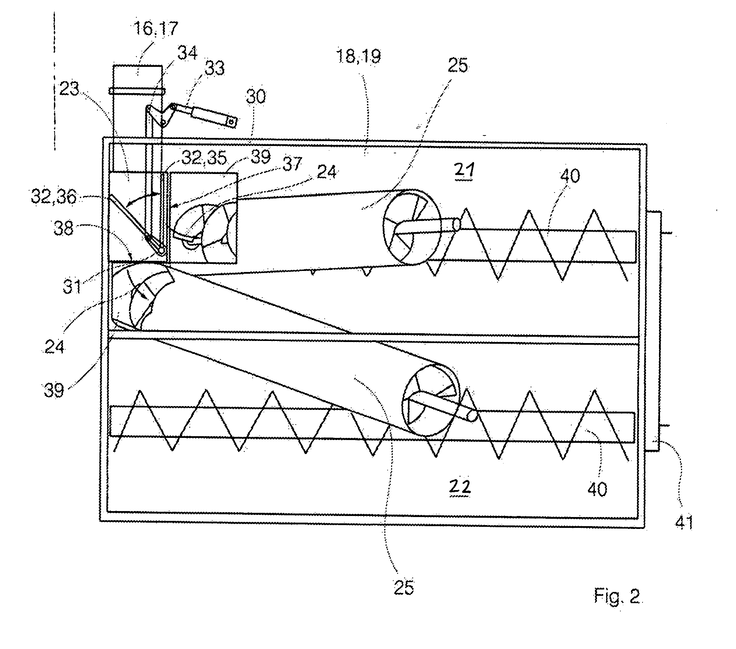

Figur 2 zeigt eine schematische Draufsicht auf die als Korntank 18 ausgeführte Speichereinrichtung 19, In einem endseitigen Bereich der Speichereinrichtung 19 durchsetzt die zumindest eine, als Elevator 16 ausgeführte Fördereinrichtung 17 die Wand 30 der Speichereinrichtung 19 und gelangt in den ihm obenseitig zugeordneten Gutstromteiler 23. Der Gutstromteiler 23 nimmt eine um eine vertikale Achse 31 schwenkbare, im einfachsten Fall als ebenes Blech ausgeführte Weiche 32 auf, die über einen mittels Hubzylinder 33 angetriebenen Schwenkmechanismus 34 in zwei Endpositionen 35, 36 bewegt werden kann. In der ersten Endposition 35 verschließt die Weiche 32 den Zugang 37 zu der die erste Fraktion 21 durchsetzenden Förderschnecke 25, während der weiter Zugang 38 in die zweite Fraktion 22 der Speichereinrichtung 19 freigegeben ist. Nimmt die Weiche 32 ihre zweite Endposition 36 ein, verschließt die Weiche 32 den Zugang 38 in die zweite Fraktion 22 während der Zugang 37 zu der ersten Fraktion 21 freigegeben wird, Jedem Zugang 37, 38 ist eine Übergabemulde 39 außerhalb des Gutstromteilers 23 angeformt, in die die Förderschnecke 25 der jeweiligen Fraktion 21, 22 eingreift, und den jeweiligen Teilnutzmaterialstrom 24 aus dem Bereich des Gutstromteilers 23 in die jeweilige Fraktion 21, 22 der Speichereinrichtung 19 abfördern, wobei jede der Förderschnecken 25, wie bereits beschrieben, starr oder schwenkbeweglich in der jeweiligen Fraktion 21, 22 der Speichereinrichtung 19 positioniert sein kann.

Jeder Fraktion 21, 22 der Speichereinrichtung 19 ist in ihrem untenseitigen Bereich jeweils eine Förderschnecke 40 zur Abförderung der Teilnutzmaterialströme 24 aus der jeweiligen Fraktion 21, 22 zugeordnet, die einendes die Teilnutzmaterialströme 24 an eine Überladeschnecke 41 übergeben, mittels derer die Teilnutzmaterialströme 24 auf ein Überladefahrzeug gefördert werden.

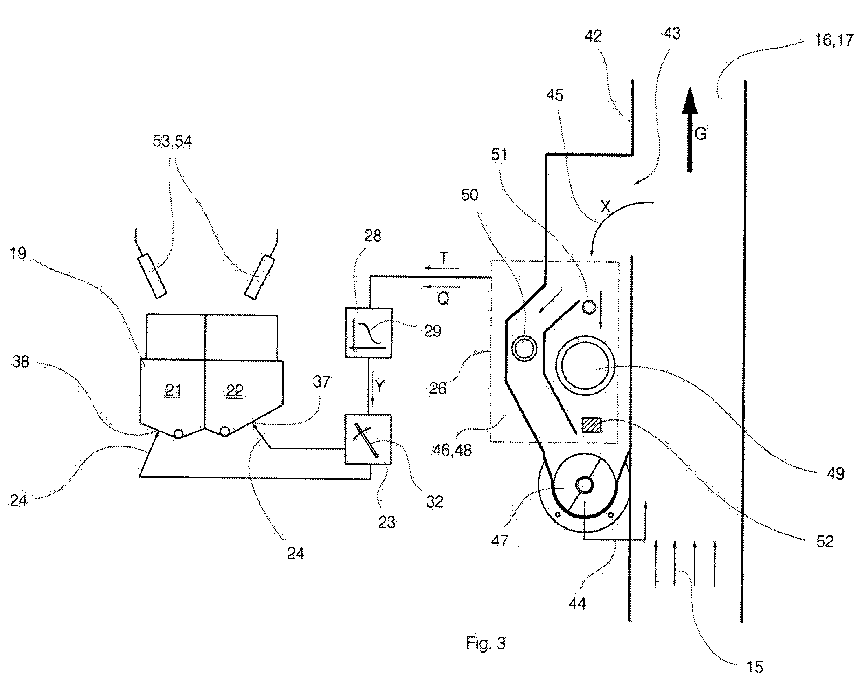

Figur 3 zeigt eine schematische Detailansicht der erfindungsgemäßen Analyseeinrichtung 26. Die Analyseeinrichtung 26 ist der zumindest einen als Elevator 16 ausgeführten Fördereinrichtung 17 außenseitig zugeordnet, wobei die Trennwand 42 zwischen der Analyseeinrichtung 26 und der Fördereinrichtung 17 in Gutflussrichtung G gesehen eine obere Durchtrittsöffnung 43 und eine untere Gutdurchtrittsöffnung 44 aufweist. Über die obere Gutdurchtrittsöffnung 43 gelang permanent ein Anteil des Nutzmaterialstromes 15 als sogenannter Analysematerialstrom 45 in die Analyseeinrichtung 26, passiert in dieser schwerkraftbedingt einen Sensorkopf 46 und wird am untenseitigen Ende der Analyseeinrichtung 26 über geeignete Fördermittel 47 über die untere Gutdurchtrittsöffrnung 44 wieder in die Fördereinrichtung 17 zurückgeführt.

In einer bevorzugten Ausgestaitungsvariante ist der Sensorkopf 46 als sogenannter NIR-Sensor (Nah-Infrarot-Sensor) 48 ausgebildet, der in der Lage ist, spezifische Parameter X des Analysematerialstromes 45 und damit des zugehörigen Nutzmatenalstromes 15 zu detektieren. In einer ersten Ausgestaltung ist der Sensorkopf 46 als an sich bekannter und deshalb nicht näher beschriebener Reflexionsmesskopf 49 ausgestaltet, dessen Lichtquelle den Analysematerialstrom 45 anstrahlt und dessen Reflexionsmesseinrichtung die reflektierten Lichtwellen analysiert und aus dieser Analyse spezifische Parameter X des Analysematerialstroms 45 und damit des Nutzmaterialstromes 15 ermittelt, wobei die spezifischen Parameter X ein oder mehrere Inhaltstoffe, wie Proteingehalt oder dergleichen, sein können. Der Sensorkopf 46 kann aber auch gemäß der linken Darstellung in Figur 3 als Transmissionsmesskopf 50 ausgebildet sein. In diesem Fall wird der Analysematerialstrom 45 von der Lichtquelle des Transmissionsmesskopfes 50 durchleuchtet, wobei die spezifischen Parameter X mittels Analyse der durch den Analysematerialstrom 45 hindurchtretenden Lichtstrahlen ermittelt werden. Aufgrund dessen, dass die Inhaltsstoffbestimmung mittels der beschriebenen NIR-Sensoren 48 nur dann brauchbare Ergebnisse liefert, wenn eine bestimmte Mindestmenge an zu detektierendem Gut den Sensorkopf 46 durchläuft und während der Messung optimale Temperaturen herrschen, sind dem Sensorkopf 46 je nach gewünschter Messgenauigkeit eine Lichtschranke 51 zur Gutmengendetektion und/oder Temperatursensoren 52 zur Ermittlung der Temperatur des Analysematerialstroms 45 und der Außentemperatur zugeordnet.

In einer weiteren Ausgestaltung der Erfindung kann die Analyseeinrichtung 26 auch so beschaffen sein, dass sie sowohl einen Reflexionsmesskopf 49 als auch einen Transmissionsmesskopf 50 umfasst, wobei in diesem Fall der Transmissionsmesskopf 50 als Bypass dem Reflexionsmesskopf 49 demontierbar zugeordnet ist, sodass in Abhängigkeit von den Guteigenschaften und Umgebungsbedingungen jeweils der besser mit den jeweiligen Bedingungen zurechtkommende Sensorkopf 46 einsetzbar ist.

Die Analyseeinrichtung 26 kommuniziert mit der in der Analyseeinrichtung 26 oder an beliebiger Stelle in der landwirtschaftlichen Erntemaschine 1 angeordneten Steuer- und Regeleinrichtung 28. Die Steuer- und Regeleinrichtung 28 kann so beschaffen sein, dass sie zunächst die von der Lichtschranke 51 generierten Gutdurchsatzsignale Q und die von den Temperatursensoren 52 generierten Temperatursignale T prüft und den oder die Sensorköpfe 46 nur aktiviert, wenn der Gutdurchsatz und/oder die Temperatur in einem Bereich liegen, der brauchbare Messergebnisse für die spezifischen Parameter X erwarten lässt, Weiter sind in der Streuer- und Regeleinrichfung 28, wie bereits beschrieben, editierbare Qualitätskennlinien 29 hinterlegt, die die Qualitätsparameter der den Fraktionen 21, 22 der Speichereinrichtung 19 zuzuführenden Teilnutzmaterialströme 24 definieren, In Abhängigkeit von den Qualitätskennlinien 29 generiert die Steuer- und Auswerteinrichtung 28 schließlich ein Stellsignal Y, welches zum Verschwenken der dem Gutstromteiler 23 zugeordneten Weiche 32 in der Weise führt, dass jeweils einer der Zugänge 37, 38 zu den Fraktionen 21, 22 der Speichereinrichtung 19 geschlossen ist während der andere Zugang 37, 38 für den Durchgang des Nutzmaterialstromes 15 in die Speichereinrichtung 19 geöffnet ist. Indem permanent ein Analysematerialstrom 45 aus dem Nutzmaterialstrom 15 in die Analyseeinrichtung 26 umgelenkt wird, ist sichergestellt, dass sehr präzise eine Separierung des Nutzmaterialstromes 15 in die beschriebenen Teilnutzmaterialströme 24 erfolgen kann, sodass in den Fraktionen 21, 22 der Speichereinrichtung 19 Teilnutzmaterialströme 24 gespeichert werden, die nahezu gleiche oder ähnliche Guteigenschaften aufweisen.

Aufgrund dessen, dass die Speichereinrichtung 19 in zumindest zwei Fraktionen 21, 22 unterteilt ist und diese in Abhängigkeit von den detektierten Ernteguteigenschaften befüllt werden, wird der Befüllgrad der Fraktionen 21, 22 voneinander abweichen. Damit ein Überlaufen einer der Fraktionen 21, 22 vermieden wird ist ferner vorgesehen, dass der Befüllgrad jeder Fraktion 21, 22 mittels einer geeigneten Sensiereinrichtung 53, vorzugsweise ein Kamera 54 überwacht wird.

### Bezugszeichenliste:

| | | | |
|---|---|---|---|
| 1 | landwirtschaftliche Erntemaschine | 31 | vertikale Achse |
| 2 | Mähdrescher | 32 | Weiche |
| 3 | Getreideschneidwerk | 33 | Hubzylinder |
| 4 | Getreide | 34 | Schwenkmechanismus |
| 5 | Schrägfördereinrichtung | 35 | Endposition |
| 6 | Dreschorgane | 36 | Endposition |
| 7 | Gutstrom | 37 | Zugang |
| 8 | Vorbereitungsboden | 38 | Zugang |
| 9 | Reinigungseinrichtung | 39 | Übergabemulde |
| 10 | Gutstrom | 40 | Förderschnecke |
| 11 | Hordenschüttler | 41 | Überladeschnecke |
| 12 | Trenneinrichtung | 42 | Trennwand |
| 13 | Gutstrom | 43 | Gutdurchtrittsöffnung |
| 14 | Rücklaufboden | 44 | Gutdurchtrittsöffnung |
| 15 | Nutzmaterialstrom | 45 | Analysematerialstrom |
| 16 | Elevator | 46 | Sensorkopf |
| 17 | Fördereinrichtung | 47 | Fördermittel |
| 18 | Korntank | 48 | NIR-Sensor |
| 19 | Speichereinrichtung | 49 | Reflexionsmesskopf |
| 20 | Trennwand | 50 | Transmissionsmesskopf |
| 21 | Fraktion | 51 | Lichtschranke |
| 22 | Fraktion | 52 | Temperatursensor |
| 23 | Gutstromteiler | 53 | Sensiereinrichtung |
| 24 | Teilnutzmaterialstrom | 54 | Kamera |
| 25 | Förderschnecke | FR | Fahrrichtung |
| 26 | Analyseeinrichtung | G | Gutförderrichtung |
| 27 | Bypass | T | Temperatursignal |
| 28 | Steuer- und Regeleinrichtung | Q | Durchsatzsignal |
| 29 | Qualitätskennlinie | X | spezifische Parameter |
| 30 | Wand | Y | Stellsignal |

## Patentansprüche

1. Selbstfahrende Erntemaschine (1), insbesondere Mähdrescher (2), mit einem Erntevorsatz (3) zum Ernten von Halmgut, Arbeitsorganen (6, 9) zur Entkörnung des Halmgutes und zur Trennung und Reinigung der aus dem Halmgut separierten, einen Nutzmaterialstrom (15) bildenden Fruchtstände, zumindest einer Fördereinrichtung (17) für den Transport des Nutzmaterialstromes über einen Gutstromteiler (23) in eine zumindest in zwei Fraktionen (21, 22) unterteilte Speichereinrichtung (19), wobei der zumindest einen Fördereinrichtung (17) eine permanent spezifische Parameter (X) des Nutzmaterialstrom (15) detektierende Analyseeinrichtung (26) zugeordnet ist und wobei in Abhängigkeit von dem Analyseergebnis der Gutstromteiler (23) den Nutzmaterialstrom (15, 24) einer der zumindest zwei Fraktionen (21, 22) der Speichereinrichtung (19) zuführt, wobei eine Steuer- und Regeleinrichtung (28) in Abhängigkeit von einer jeder Fraktion (21, 22) der Speichereinrichtung (19) zugeordneten Qualitätskennlinie (29) für Tellnutzmaterialströme (24) Stellsignale (Y) zur Ansteuerung des Gutstromteilers (23) generiert
**dadurch gekennzeichnet,**
**dass** die Analyseeinrichtung (26) der zumindest einen Fördereinrichtung (17) als Bypass (27) in der Weise zugeordnet ist, dass permanent ein Analysematerialstrom (45) des die Fördereinrichtung (17) durchlaufenden Nutzmaterialstromes (15) in die Analyseeinrichtung (26) umgelenkt wird und nach dessen Analyse dem Nutzmaterialstrom (15) wieder zugeführt wird, und dass der Gutstromteiler (23) eine schwenkbare Weiche (32) umfasst, die in Abhängigkeit von den von der Steuer- und Regeleinrichtung (28) generierten Stellsignalen (Y) den Zugang (37, 38) zu der Jeweiligen Fraktion (21, 22) der Speichereinrichtung (19) freigibt.

2. Selbstfahrende Erntemaschine nach Anspruch 1, **dadurch gekennzeichnet, dass** die Analyseeinrichtung (26) zur Analyse spezifischer Parameter (X) des Analysematerialstroms (45) einen Sensorkopf (46) umfasst.

3. Selbstfahrende Erntemaschine nach Anspruch 2, **dadurch gekennzeichnet, dass** der Sensorkopf (46) als NIR-Sensor (48) zur Bestimmung eines oder mehrerer Inhaltsstoffe des Analysematerialstroms (45) ausgebildet ist.

4. Selbstfahrende Erntemaschine nach einem der Ansprüche 2 oder 3, **dadurch gekennzeichnet, dass** der Sensorkopf (46) einen Reflexionsmesskopf (49) und/oder einen Transmissionsmesskopf (50) umfasst.

5. Selbstfahrende Erntemaschine nach Anspruch 4, **dadurch gekennzeichnet, dass** der Transmissionsmesskopf (50) demontierbar an der Analyseeinrichtung (26) angeordnet ist.

6. Selbstfahrende Erntemaschine nach einem der Ansprüche 2-5, **dadurch gekennzeichnet, dass** dem Sensorkopf (46) eine Lichtschranke (51) und/oder ein oder mehrere Temperatursensoren (52) zugeordnet ist/sind.

7. Selbstfahrende Erntemaschine nach einem der vorhergehenden Ansprüche, **dadurch gekennzeichnet, dass** die Analyseeinrichtung (26) mit der Steuer- und Regeleinrichtung (28) kommuniziert, die in Abhängigkeit von den ermittelten spezifischen Parametern (X) des Nutzmaterialstromes (15) den Gutstromteiler (23) zur Förderung des Nutzmaterialstrames (15, 24) In eine der zumindest zwei Fraktionen (21, 22) der Speichereinrichtung (19) ansteuert.

8. Selbstfahrende Erntemaschine nach einem der Ansprüche 1 bis 7, **dadurch gekennzeichnet, dass** die Weiche (32) mittels Hubzylinder(33) verschwenkbar ist und wobei die Welche (32) in ihrer ersten Endposition (35) den einen Zugang (37) verschließt und den weiteren Zugang (38) freigibt während sie In einer zweiten Endposition (36) den weiteren Zugang (38) verschließt und den anderen Zugang (37) freigibt.

9. Selbstfahrende Erntemaschine nach einem der Ansprüche 1 bis 8, **dadurch gekennzeichnet, dass** jedem Zugang (37, 38) des Gutstromteilers (23) eine Förderschnecke (25) zugeordnet ist, die den Nutzmateriaistrom (15, 24) in die jeweilige Fraktion (21, 22) der Speichereinrichtung (19) fördert.

10. Selbstfahrende Erntemaschine nach Anspruch 9, **dadurch gekennzeichnet, dass** die Förderschnecken (25) starr oder verschwenkbar die jeweilige Fraktion (21, 22) der Speichereinrichtung (19) durchsetzen.

11. Selbstfahrende Erntemaschine nach einem der vorhergehenden Ansprüche, **dadurch gekennzeichnet, dass** die Speichereinrichtung (19) quer zur Längsrichtung der Erntemaschine (1) in Fraktionen (21, 22) unterteilt ist.

12. Selbstfahrende Erntemaschine nach einem der vorhergehenden Ansprüche, **dadurch gekennzeichnet, dass** in der Steuer- und Regeleinrichtung (28) zur Definition der Qualität der in den Fraktionen (21, 22) der Speichereinrichtung (19) speicherbaren Teilnutzmaterialströme (24) Qualitätskennlinien (29) editierbar hinterlegt sind.

13. Selbstfahrende Erntemaschine nach einem der vorhergehenden Ansprüche, **dadurch gekennzeichnet, dass** der Befüllgrad der Fraktionen (21, 22) der Speichereinrichtung (19) mittels Sensiereinrichtungen (53) überwacht wird.

14. Selbstfahrende Erntemaschine nach Anspruch13, **dadurch gekennzeichnet, dass** die Sensiereinrichtungen (53) als Kamera (54) ausgebildet sind.

## Claims

1. A self-propelled harvesting machine (1), in particular a combine harvester (2), comprising a front-mounted harvesting device (3) for harvesting stalk material, working members (6, 9) for threshing the stalk material and for separating and cleaning the fruit heads which are separated from the stalk material and which form a useful material flow (15), at least one conveyor device (17) for transporting the useful material flow by way of a material flow divider (23) into a storage device (19) which is subdivided at least into two fractions (21, 22), wherein associated with the at least one conveyor device (17) is an analysis device (26) detecting permanently specific parameters (X) of the useful material flow (15) and wherein in dependence on the analysis result the material flow divider (23) feeds the useful material flow (15, 24) to one of the at least two fractions (21, 22) of the storage device (19), wherein a control and regulating device (28) generates adjusting signals (Y) for actuation of the material flow divider (23) in dependence on a quality characteristic (29) associated with each fraction (21, 22) of the storage device (19) for useful material flow portions (24),
**characterised in that**
the analysis device (26) is associated with the at least one conveyor device (17) as a bypass (27) in such a way that an analysis material flow (45) of the useful material flow (15) passing through the conveyor device (17) is permanently deflected into the analysis device (26) and after analysis thereof is fed back to the useful material flow (15) again and the material flow divider (23) includes a pivotable switching device (32) which enables the access (37, 38) to the respective fraction (21, 22) of the storage device (19) in dependence on the adjusting signals (Y) generated by the control and regulating device (28).

2. A self-propelled harvesting machine according to claim 1 **characterised in that** the analysis device (26) includes a sensor head (46) for the analysis of specific parameters (X) of the analysis material flow (45).

3. A self-propelled harvesting machine according to claim 2 **characterised in that** the sensor head (46) is in the form of an NIR sensor (48) for determining one or more content substances in the analysis material flow (45).

4. A self-propelled harvesting machine according to one of claims 2 or 3 **characterised in that** the sensor head (46) includes a reflection measuring head (49) and/or a transmission measuring head (50).

5. A self-propelled harvesting machine according to claim 4 **characterised in that** the transmission measuring head (50) is removably arranged on the analysis device (26).

6. A self-propelled harvesting machine according to one of claims 2 to 5 **characterised in that** associated with the sensor head (46) is or are a light barrier means (51) and/or one or more temperature sensors (52).

7. A self-propelled harvesting machine according to one of the preceding claims **characterised in that** the analysis device (26) communicates with the control and regulating device (28) which in dependence on the ascertained specific parameters (X) of the useful material flow (15) actuates the material flow divider (23) for conveying the useful material flow (15, 24) into one of the at least two fractions (21, 22) of the storage device (19).

8. A self-propelled harvesting machine according to one of claims 1 to 7 **characterised in that** the switching means (32) is pivotable by means of stroke cylinders (33) and wherein in its first end position (35) the switching means (32) closes the one access (37) and opens the further access (38) while in a second end position (36) it closes the further access (38) and opens the other access (37).

9. A self-propelled harvesting machine according to one of claims 1 to 8 **characterised in that** associated with each access (37, 38) of the material flow divider (23) is a conveyor screw (25) which conveys the useful material flow (15, 24) into the respective fraction (21, 22) of the storage device (19).

10. A self-propelled harvesting machine according to claim 9 **characterised in that** the conveyor screws (25) rigidly or pivotably pass through the respective fraction (21, 22) of the storage device (19).

11. A self-propelled harvesting machine according to one of the preceding claims **characterised in that** the storage device (19) is subdivided into fractions (21, 22) transversely to the longitudinal direction of the harvesting machine (1).

12. A self-propelled harvesting machine according to one of the preceding claims **characterised in that** quality characteristics (29) are editably stored in the control and regulating device (28) for defining the quality of the useful material flow portions (24) which can be stored in the fractions (21, 22) of the storage device (19).

13. A self-propelled harvesting machine according to one of the preceding claims **characterised in that** the degree of filling of the fractions (21, 22) of the storage device (19) is monitored by means of sensing devices (53).

14. A self-propelled harvesting machine according to claim 13 **characterised in that** the sensing devices (53) are in the form of a camera (54).

## Revendications

1. L'invention concerne une moissonneuse automotrice (1), en particulier une moissonneuse-batteuse (2), qui est munie d'un accessoire de récolte étant destiné à récolter des produits à tiges, d'organes de travail destinés à l'égrenage des produits à tiges et à la séparation et nettoyage de grappes de fruit séparées des produits à tiges et formant un flux de matériau utile (15), au moins d'un dispositif de transport (17) destiné au transport du flux de matériau utile à travers un diviseur de débit de produit (23) dans un dispositif de stockage (19) séparé au moins en deux fractions (21, 22), où au moins un paramètre spécifique permanent (X) du dispositif d'analyse (26) détectant le flux de matériau utile (15) est associé à au moins un dispositif de transport (17) et où, en fonction du résultat de l'analyse, le diviseur de débit de produit (23) conduit le flux de matériau utile (15, 24) à un des au moins deux fractions (21, 22) du dispositif de stockage (19), où un dispositif de commande et réglage (28) génère, en fonction d'une caractéristique de qualité (29) associée à chaque fraction (21, 22) du dispositif de stockage (19), des signaux de réglage (Y) pour les flux de matériaux partiellement utiles (24) afin d'actionner le diviseur de débit de produit (23)
**caractérisée en ce que**
le dispositif d'analyse (26) est associé à au moins un dispositif de transport (17) en tant que dérivation (27) de telle sorte que, de manière permanente, le flux de matériau d'analyse (45) du flux de matériau utile (15) traversant le dispositif de transport (17) est dévié dans le dispositif d'analyse (26) et qu'après son analyse il est à nouveau associé au flux de matériau utile (15) et que le diviseur de débit de produit (23) comprend un flanc pivotant (32) qui en fonction des signaux de réglage (Y) générés par le dispositif de commande et réglage (28) libère l'accès (37, 38) aux fractions correspondantes (21, 22) du dispositif de stockage (19).

2. Moissonneuse automotrice selon la revendication 1, **caractérisée en ce que** le dispositif d'analyse (26) destiné à analyser des paramètres spécifiques (X) du flux de matériaux d'analyse (45) comprend une tête de capteur (46).

3. Moissonneuse automotrice selon la revendication 2, **caractérisée en ce que** la tête de capteur (46) est formée en tant que capteur proche infrarouge NIR (48) afin de déterminer un ou plusieurs composants du flux de matériaux d'analyse (45).

4. Moissonneuse automotrice selon une des revendications 2 ou 3, **caractérisée en ce que** la tête de capteur (46) comprend une tête de mesure de réflexion (49) et/ou une tête de mesure de transmission (50).

5. Moissonneuse automotrice selon la revendication 4, **caractérisée en ce que** la tête de mesure de transmission (50) est disposée de sorte à être amovible sur le dispositif d'analyse (26).

6. Moissonneuse automotrice selon une des revendications de 2 à 5, **caractérisée en ce qu'**une cellule de détection (51) et/ou un ou plusieurs capteurs de température sont associés à la tête de capteur (46).

7. Moissonneuse automotrice selon une des revendications précédentes, **caractérisée en ce que** le dispositif d'analyse (26) communique avec le dispositif de commande et réglage (28) qui, en fonction des paramètres spécifiques transmis (X) du flux de matériau utile (15), actionne le diviseur de débit de produit (23) de sorte à transporter le flux de matériau utile (15, 24) dans une des au moins deux fractions (21, 22) du dispositif de stockage (19).

8. Moissonneuse automotrice selon une des revendications de 1 à 7, **caractérisée en ce que** le flanc (32) est susceptible d'être pivoté à l'aide d'un cylindre de levage (33) et où le flanc (32) verrouille dans sa première position terminale le un accès (37) et libère l'autre accès (36) tandis que, dans une deuxième position terminale (36), il verrouille l'autre accès (36) et libère le un accès (37).

9. Moissonneuse automotrice selon une des revendications de 1 à 8, **caractérisée en ce qu'**un convoyeur à vis (25) est associé à chaque accès (37, 38) du diviseur de débit de produit (23) qui transporte le flux de matériau utile (15, 24) dans la fraction correspondante (21, 22) du dispositif de stockage (19).

10. Moissonneuse automotrice selon la revendication 9, **caractérisé en ce que** le convoyeur à vis (25) pénètre de manière rigide ou pivotante la fraction correspondante (21, 22) du dispositif de stockage (19).

11. Moissonneuse automotrice selon une des revendications précédentes, **caractérisée en ce que** le dispositif de stockage (19) est subdivisé en fractions (21, 22) transversalement par rapport à la direction longitudinale de la moissonneuse (1).

12. Moissonneuse automotrice selon une des revendications précédentes, **caractérisée en ce que** des caractéristiques de qualité (29) sont consignées de sorte à être réglables dans le dispositif de commande et réglage (28) afin de définir la qualité des flux de matériau partiellement utiles (24) susceptibles d'être stockés dans les fractions (21, 22).

13. Moissonneuse automotrice selon une des revendications précédentes, **caractérisée en ce que** le degré de remplissage des fractions (21, 22) du dispositif de stockage (19) est surveillé à l'aide de dispositifs de détection (53).

14. Moissonneuse automotrice selon la revendication 13, **caractérisée en ce que** les dispositifs de détection (53) sont formés en tant que caméra.
